# EUROPÄISCHE PATENTANMELDUNG

(11) **EP 3 530 710 A1**
(43) Veröffentlichungstag der Anmeldung: **28.08.2019**
(21) Anmeldenummer: 18158403.8
(22) Anmeldetag: 23.02.2018
(51) Int. Cl.: C09J 197/00

(54) **KLEBSTOFF, HERSTELLUNG UND ANWENDUNG EINES KLEBSTOFFES**

(71) Anmelder: MAGNA STEYR Fahrzeugtechnik AG & Co KG, 8041 Graz (AT)
(72) Erfinder: PRIETL, Marion, 8042 Graz (AT)
(74) Vertreter: Zangger, Bernd

(57) **Zusammenfassung**

Ein Klebstoff, insbesondere zum Kleben von Leder, enthaltend
- eine wässrige Lösung enthaltend 5 - 90 Gewichtsprozent Ligninsulfonat, bevorzugt 15 - 30 Gewichtsprozent Ligninsulfonat,
- Enzyme in einem volumenbezogenen Verhältnis von 1:70 bis 1:150, bevorzugt etwa 1:100, also beispielsweise 1 ml Enzyme auf 100 ml Ligninsulfonat in wässriger Lösung,
dadurch gekennzeichnet, dass der Klebstoff Glyzerin in einem volumenbezogenen Verhältnis von 1:1 bis 1:4, bevorzugt etwa 1:2 enthält, also beispielsweise 1 Liter Glyzerin auf 2 Liter Ligninsulfonat in wässriger Lösung.

## Beschreibung

### Gebiet der Erfindung

Die vorliegende Erfindung betrifft einen Klebstoff, insbesondere zum Kleben von Leder, insbesondere in der Automobilherstellung, sowie ein Verfahren zur Herstellung des Klebstoffes und ein Verfahren zur Anwendung des Klebstoffes.

### Stand der Technik

Derzeit sind in der Automobilindustrie vorwiegend Klebstoffe im Einsatz, welche aus erdöl-basierten Grundsubstanzen hergestellt werden und zudem aromatische oder andere gesund-/umweltrelevante Eigenschaften haben, zum Beispiel Bisphenol A, Aminobenzene, Isocyanate. Zudem werden unter anderem Dispersionsklebstoffe verwendet, die durch das Verdampfen der Lösemittel aushärten. Diese Lösemittel sind meist organische Lösemittel, wie zum Beispiel Chloride, Toluene oder Trichloroethan. Diese sind gemäß VOC-Richtlinien als gesunds- und umweltkritisch einzustufen und bedürfen einer speziellen Handhabung hinsichtlich Anwendung (ArbeitnehmerInnenschutz), Lagerung (Explosionsschtuz) und Entsorgung (gefährlicher Abfall).

Wasserbasierte Klebstoffe haben Wasser als Lösemittel, welches als ungefährlich eingestuft ist. Wasserbasierte Lösemittel werden oft mit bio-basierten Substanzen kombiniert. Neben der gesundheits- und umweltrelevanten Unbedenklichkeit, ermöglicht die Verwendung von bio-basierten Substanzen die Aufwertung von Nebenprodukten aus Bioraffernieren (um Beispiel Papier-, Zellstoffindustrie) und ermöglicht eine wertschöpfende Entsorgung am Ende des Lebenszyklus (zum Beispiel Recycling, Verbrennung, Düngemittel).

Ein attraktiver bio-basierter Rohstoff ist Lignin, welcher als Nebenprodukt in der Papier und Zellstoffindustrie anfällt. Je nach Aufschlussverfahren der Holzzelle fällt entweder Kraft-Lignin (Sulfatprozess) oder Lignosulfonate (Sulfitverfahren) an. Die Lignosulfonate haben aufgrund der Molekularstruktur ein höheres Molekulargewicht und sind sehr kohlenstoffreich, was bedeutet, dass man diese Substanz als alternative Kohlenstoffquelle zu fossil-basierten Ressourcen verwenden kann, zum Beispiel als Ersatz oder Zusatz für erdölbasierte Phenol-Formaldehyd-Harze.

Lignosulfonate per se sind aber nicht als Klebstoff im industriellen Einsatz. Lignin oder Ligninbasierte Klebstoffe wurden schon in den 70er für die Verklebung von Holz untersucht. Jedoch waren die Eigenschaften des Klebstoffes unzureichend, insbesondere in Hinblick auf Haltbarkeit, Wasseraufnahme und Viskostiät für die Applikation. Der Einsatz von Lignosulfonaten in der Automobilindustrie war bisher nicht möglich.

Die DE 10 2005 051 350 A1 lehrt einen Klebstoff, der die folgenden Komponenten enthält:
- mindestens ein Polysaccharid,
- Ligninsulfonat und
- ein wässeriges Lösungsmittel
   oder
- mindestens ein Polysaccharid und
- ein in einem wässerigen Lösungsmittel gelöstes Ligninsulfonat.

Ein solcher Klebstoff soll gegenüber Wasser beständiger sein.

Inzwischen gab es auch Versuche die molekulare Struktur der Lignosulfonate mittels eines Enzyms so weit zu verändern, dass die Eigenschaften hinsichtlich Benetzbarkeit wesentlich verbessert wurden, wie bekannt aus "Polymerization of Various Lignins via Immobilized Myceliophthora thermophila Laccase (MtL)", Daniela Huber, Alessandro Pellis, Andreas Daxbacher, Gibson S. Nyanhongo and Georg M. Guebitz in Polymers 2016, 8, 280; doi:10.3390/polym8080280; MDPI.

Verbesserte Klebeeigenschaften waren dabei aber nicht erzielbar.

Der Einsatz von biobasierten Klebstoffen wäre ein Beitrag zur nachhaltigen Umgangsweise mit den Ressourcen und zur Dekarbonisierung der Industrie. Nicht nur der CO2-Ausstoß verursacht durch die Nutzung des Fahrzeuges, sondern auch der Einsatz von Materialien im Fahrzeugbau spielt in den nächsten Jahren eine zentrale Rolle. Durch entsprechende Material-Wahl könnte der Gesamt-CO2-Auststoß eines Fahrzeuges reduziert werden.

### Zusammenfassung der Erfindung

Es ist eine Aufgabe der Erfindung, einen Klebstoff anzugeben, insbesondere zum Kleben von Leder im industriellen Einsatz, der gut umweltverträglich ist und energie- und kostenschonend hergestellt und angewendet werden kann, sowie ein ökonomisches Herstellungsverfahren und Anwendungsverfahren für den Klebstoff anzugeben.

Die Lösung der Aufgabe erfolgt durch einen Klebstoff, insbesondere zum Kleben von Leder, mit einer Zusammensetzung gemäß Anspruch 1.

Der Klebstoff enthält erfindungsgemäß
- eine wässrige Lösung enthaltend 5 - 90 Gewichtsprozent Ligninsulfonat, bevorzugt 15 - 30 Gewichtsprozent Ligninsulfonat,
- Enzyme in einem volumenbezogenen Verhältnis von 1:70 bis 1:150, bevorzugt etwa 1:100, also beispielsweise 1 ml Enzyme auf 100 ml Ligninsulfonat in wässriger Lösung,
- wobei der Klebstoff Glyzerin in einem volumenbezogenen Verhältnis von 1:1 bis 1:4, bevorzugt etwa 1:2 enthält, also beispielsweise 1 Liter Glyzerin auf 2 Liter Ligninsulfonat in wässriger Lösung.

Erfindungsgemäß wurde eine Lignin-basierte Grundsubstanz so modifiziert, dass sie hervorragende Eigenschaften als Klebstoff aufweist. Insbesondere ist hierdurch ein Einsatz eines bio-basierten Klebstoffes in der Automobilindustrie möglich, wodurch eine positive Umweltbilanz und eine Erhöhung der Arbeitssicherheit erreicht werden kann.

Der wässrigen Ligninsulfonat-Lösung ist erfindungsgemäß zusätzlich zu einem Enzym auch Glyzerin beigegeben, wobei das Glyzerin bevorzugt in einer Reinheit von mindestens 90 %, besonders bevorzugt mindestens 99 %, zugesetzt wird.

Es hat sich herausgestellt, dass ein derartiger Klebstoff herausragende Klebeeigenschaften insbesondere zur Verklebung von Leder mit Leder, Leder mit Viskose und Viskose mit Viskose aufweist.

Besonders gute Klebeeigenschaften werden erzielt wenn der Klebstoff nach dem Herstellen der Lösung weiterverarbeitet wird, wie nachfolgend genauer beschrieben. Ebenso ist eine Anwendung des Klebstoffes besonders vorteilhaft, wie später beschrieben.

Der erfindungsgemäße Lignin-Klebstoff kann auch für die Verklebung von anderen biobasierten Materialien im Fahrzeugbau eingesetzt werden, insbesondere auch für das Verkleben von Verbundstoffen aus Papier, Karton, Cellulose-fasern, Baumwolle, Holz oder andere biobasierte Materialien. Besonders bevorzugt ist jedoch die Verwendung für Leder auf Leder, Leder auf Viskose und/oder Viskose auf Viskose.

Eine 100 % Wiederverwertung (thermisch, stofflich, biologisch abbaubar) kann mit einem derartigen Klebstoff angestrebt werden.

Ein Vorteil des erfindungsgemäßen Klebstoffes ist dessen Umweltverträglichkeit. Im Vergleich zu vielen herkömmlichen Klebstoffen, die zum einen erdöl-basierend sind, und zum anderen einen signifikanten Lösemittelanteil besitzen, besitzt der biobasierte Klebstoffe vorzugsweise weder Lösemittel noch andere schädliche Stoffe. Hinsichtlich Arbeitnehmerschutz bedeutet dies, das keine gesundheitsschädlichen Auswirkungen bei der Anwendung des Klebstoffes zu befürchten sind und in weiterer Folge keine Schutzmaßnahmen notwendig sind, wie beispielweise Absaugung einer Applizierkabine oder Atemschutz. Auch die Entsorgung von Klebstoffresten ist unproblematisch, da der Klebstoff als "nicht gefährlicher Abfall" eingestuft wird. Dadurch werden Kosten und Aufwände gespart. Zusätzlich ist die Lagerung unbedenklich und erfordert keine explosionsschützende Maßnahmen.

Ebenso kann eine Energieeinsparung beim Aushärteverfahren des erfindungsgemäßen Klebstoffes eine Kostenersparnis bewirken. Ein weiterer positiver Aspekt liegt nämlich im Aushärteverhalten des Klebstoffes. Da der Klebstoff nur durch die Anwesenheit von Sauerstoff aushärtet, ist ein zusätzliches Trocknungsverfahren nicht erforderlich. Dies führt zu erheblichen Energieeinsparungen. Eine Erhöhung der Temperatur, zum Beispiel in einem Ofen, kann den Aushärtevorgang zusätzlich beschleunigen.

Eine Kostenersparnis wird auch durch die Rohstoffpreise der verwendeten Materialien erzielt. Die Rohstoffpreise für Epoxidharz und aromatische Polyurethane, welche ein Grundbestandteil von industriellen Klebstoffen sind, liegen wesentlich höher, als jene für Lignosulfonate. Die Kostenersparnis schlägt sich auch in der Synthese des Klebstoffes wieder. Der Klebstoff besteht aus zwei wesentlichen Substanzen: Lignin und Glyzerin, sowie aus einem verschwindend geringen Anteil von Enzymen. Die Synthese ist einfach im Vergleich zu kommerziellen, bekannten Klebstoffen.

Durch Zugabe von AKD (Alkyl-keten-dimere) kann die Eigenschaft des Klebstoffes weiter verbessert werden, wobei AKD in bekannter Weise beispielsweise zur Beschichtung von Papier verwendet wird, um es wasserabweisender zu machen.

Bevorzugt umfasst der Klebstoff daher zusätzlich bzw. alternativ je nach Anwendungsfall (zB. für Anwendungen, wo hohe Feuchtigkeit zu erwarten ist), auch AKD (Alkyl-keten-dimere) im gewichts-, volumenbezogenen Verhältnis 1 - 10 m/V %, also beispielsweise 1 g auf 100ml Ligninsulfonat in wässriger Lösung. Bevorzugt 1 - 5 m/V %.

Der Einsatz eines erfindungsgemäßen lignin-basierten Klebstoff in der Fertigung von Autositzen, insbesondere zur Verklebung von Leder-Viskose für einen Sitzbezug, wurde unter Berücksichtigung von Qualitäts- und Prozessbedingungen erfolgreich und nachweislich, mittels genormter Testverfahren, erprobt.

In der Sitzfertigung, bei der Verklebung von Leder/Viskose oder Leder/Leder, härten übliche, kommerzielle Klebstoffe, die dafür im Einsatz sind, bei 85 °C/135 °C (2 Temperaturstufen) aus. Der erfindungsgemäße, biobasierte Klebstoff härtet bei 35°C/35°C aus. Und das bei gleicher Durchlaufzeit.

Vorzugsweise ist das verwendete Enzym Myceliophthora thermophila Laccase.

Die Viskosität des Klebstoffes beträgt bevorzugt 6-15 Pa*s (Pascalsekunden), besonders bevorzugt 7-10 Pa*s, und insbesondere etwa 8 Pa*s.

In einem erfindungsgemäßen Verfahren zur Herstellung eines Klebstoffes, insbesondere zum Kleben von Leder, wird nach dem Mischen oder Bereitstellen einer wässrigen Lösung mit Bestandteilen wie oben beschrieben, die wässrige Lösung durch Umwälzen und Erhitzen weiterverarbeitet, wobei das Umwälzen bevorzugt kontinuierlich erfolgt, insbesondere durch Rühren, Mixen, Sprudeln oder Einblasen von Luft.

Das kontinuierliche Umwälzen, insbesondere Rühren, und Erhitzen erfolgt bevorzugt so lange, bis eine gewünschte Viskosität erreicht ist, nämlich insbesondere bis die Viskosität etwa 8 Pa*s beträgt.

Das Weiterverarbeiten durch Erhitzen und umwälzen, bevorzugt kontinuierliches Rühren, erfolgt bevorzugt auf einer Heizplatte oder in einem anderen beheizten Gefäß, in dem vorzugsweise ein Rührer eingebaut ist. Besonders bevorzugt wird eine Heizplatte mit einem Magnetrührer eingesetzt oder eine magnetische Heizplatte mit einem Rührknochen. Die Rührdrehzahl ist 300 bis 800 rpm, wobei 700 rpm die besten Ergebnisse erzielt.

Das Rühren hat den Zweck, eine homogene Konsistenz der Substanz herzustellen und Sauerstoff einzutragen. Ein Eintrag von Sauerstoff kann aber auch alternativ oder zusätzlich, durch Einblasen von Druckluft oder durch Belüftungssysteme, wie es bei Belebungsbecken in der Abwasserreinigung oder in Aquarien vorkommt, erfolgen.

Die Anwendung eines erfindungsgemäß hergestellten Klebstoffes erfolgt besonders wirksam entweder direkt nach dem Weiterverarbeiten, wie oben beschrieben, oder der Klebstoff wird nach dem Weiterverarbeiten unter Ausschluss von Sauerstoff, vorzugsweise gekühlt, gelagert und erst später zum Kleben genutzt.

Mittels des Klebstoffes kann Leder auf Leder, Leder auf Viskose und/oder Viskose auf Viskose geklebt werden, insbesondere zur Herstellung eines Autositzes, insbesondere zur Herstellung eines Sitzbezugs.

Die Herstellung einer Klebeverbindung mittels des Klebstoffes erfolgt bevorzugt bei 35 Grad Celsius und/oder bei 2 bar Druck. Insbesondere kann eine solche Klebeverbindung in einer Laminiermaschine hergestellt werden, wobei auch andere Fertigungsverfahren, wie Verstreichen mit einem Pinsel und anschließendes Beschweren der Bauteile, oder eine Applikation mit einer Sprühpistole möglich sind. Die Herstellung einer Klebeverbindung für einen Sitzbezug mittels des Klebstoffes erfolgt bevorzugt auf einer für die Sitzfertigung geeigneten Laminier-Maschine, das heißt einem Ofen mit zwei beheizten Walzen, die eine gewisse Temperatur und einen Anpressdruck auf die zu verklebenden Teile erzeugen, vorzugsweise bei 35 Grad Celsius und / oder vorzugsweise bei 2 bar Druck.

### Detaillierte Beschreibung der Erfindung

Die enzymatisch polymerisierten Ligninsulfonate als Grundsubstanz des erfindungsgemäßen Klebstoffes können 30 % Trockensubstanz (Ligninsulfonat) aufweisen. Diese (noch sehr wässrige) Lösung wird dann weiterverarbeitet, um das Applikationsverhalten und die Eigenschaften, insbesondere Klebeeigenschaft und Festigkeit des Klebstoffes, zu verbessern.

Ein Grundbestandteil des Klebstoffs besteht aus Ligninsulfonaten (ein Nebenprodukt aus der Papier/Zellstoffindustrie, entsteht nach dem Holzaufschluss). Diese werden mit einer gewissen Menge Glyzerin und Enzymen (Myceliophthora thermophila Laccase) und gegebenenfalls zusätzlich mit Alkyl-keten-dimeren (AKD) versetzt. Die Enzyme spalten die phenolischen Gruppen der Ligninsulfonate, wodurch hoch reaktive Sauerstoffradikale gebildet werden. Diese reagieren wieder mit anderen Radikalen oder funktionellen Gruppen des Moleküls. Dieser Vorgang ist ein enzymatischer Polymerisationsvorgang, wodurch die Verzweigungen des Makromoleküls erhöht werden. Durch diesen Vorgang wird das Makromolekül Ligninsulfonat neu strukturiert und dadurch "homogenisiert" bzw. gleichmäßiger gestaltet. Dies führt zu einer Verbesserung der Eigenschaften, besonders hinsichtlich Applikation, Festigkeit oder Löslichkeit.

Es hat sich im Lauf der Untersuchungen der Antragstellerin erwiesen, dass ein Zusatz von Ligninsulfonate:Glycerin im Verhältnis 1:1 bis 4:1, besonders aber 2:1, die besten Ergebnisse hinsichtlich der Elastizität und Klebeigenschaften brachte. Die hohe Elastizität ist insbesondere für eine Anwendung in der Sitzfertigung, in der weniger festigkeitsrelevant Verbindungen, sondern mehr flexible Materialien verwendet werden, von großer Bedeutung. Das Verhältnis der einzelnen Bestandteile in der Ausgangssubstanz bei besten Ergebnissen war: Ligninsulfonate in wässriger Lösung: mindestens 15 % Trockensubstanz, maximal 30 % Trockensubstanz, Glyzerin: 1:2 Verhältnis Glyzerin/ Ligninsulfonaten, Enzyme: Myceliophthora thermophila Laccase - 1:100 Verhältnis Enyzme/ Ligninsulfonate, und wahlweise zusätzlich Alkyl-keten-dimere 1 - 5 m/V % (Verhältnis Alkyl-keten-dimere / Ligninsulfonat in wässriger Lösung.

Die Weiterverarbeitung erfolgt erfindungsgemäß durch kontinuierliches Rühren und Erhitzen, beispielsweise auf einer herkömmlichen magnetischen Heizplatte mit einem Rührknochen. Die Parameter für die Verarbeitung sind bevorzugt T = 50 - 55 °C, 700 rpm (Rührerdrehzahl), t = 1.5 - 2.00 h. Ziel ist es, durch eine "Vor-Polymerisation" die Eigenschaften zu verbessern. Im Wesentlichen wird dabei die Viskosität erhöht, um die Applikationseigenschaften zu optimieren. Diese "Vor-Polymerisation" der Substanz darf jedoch nur bis zu einem gewissen Punkt laufen. Wenn dieser optimale Punkt überschritten ist, gibt es eine Phasenumwandlung und die Substanz wird hydrogel-artig. Dadurch verschlechtern sich die Klebe- und Applikationseigenschaften wesentlich und die Substanz ist nicht mehr für eine Klebeverbindung verwendbar. Daher ist die Einhaltung der Parameter wesentlich, um die optimale Viskosität durch eine Polymerisationsreaktion zu erzielen. Die optimale Viskosität wurde ermitteln und beträgt 8 Pa*s (maximal 15 Pa*s).

Die "vor-polymerisierte" Substanz kann nun im Anschluss für die Herstellung einer Klebeverbindung verwendet werden. Andernfalls muss diese Substanz unter Ausschluss von Sauerstoff (luftdicht oder unter Stickstoffatmosphäre) und gekühlt (maximal 12 °C) gelagert werden, da es ansonsten zum unerwünschten Aushärten der Substanz kommt.

Neben den Tätigkeiten zur Vorkonditionierung wurden die Klebeeigenschaften und die Anwendbarkeit für die Automobilindustrie untersucht und verbessert:
Der Lignin-Klebstoff wurde zunächst auf diversen Materialen untersucht. Diese Materialien waren beispielweise Stahl (verzinkt), Aluminum (Alodine), CFK (P16_30 142 Hexion EPFC LCM-278), Polypropylen (PP ST6008) und Leder (Probe aus der Sitzfertigung) und Viskose (Probe aus der Sitzfertigung). Die Vorauswahl erfolgt mit dem Raupenschältest, um die Anfangshaftung und das Bruchbild nach DIN EN ISO 10365 zu untersuchen.

Dabei hat sich herausgestellt, dass Leder/Leder, Leder/Viskose und Viskose/Viskose, sowie Materialien oder Verbundstoffe aus Papier, Karton, Cellulose-fasern, Baumwolle, Holz oder andere biobasierte Materialien die besten Ergebnisse erzielten. Diese wurden teilweise danach in eine Zug/Scherversuch nach DIN EN ISO 10365 untersucht und in späterer Folge in einer "Case-Study" untersucht.

Der Klebstoff wird nach der Weiterverarbeitung, wie oben beschrieben, mit einem Pinsel, Spaten, Spritze oder durch eine Sprühpistole auf einer Seite des Substrats aufgetragen. Im Falle des Leders, das sich aufgrund der natürlichen Struktur verformt, wird ein Glätten mit einer Walze o.ä. bzw. eine Beschwerung mit einem Gewicht empfohlen. Der Klebstoff selbst würde keinen Anpressdruck benötigen, um in die Poren des Leders oder der Viskose einzudringen. Der Klebstoff härtet ohne Temperaturerhöhung (bei ca. 23°C- 25°C/ 35 % r.F - 50 % r.F. aus). Die Anhaftdauer ist 30 min, die vollkommene Aushärtung nach 1.5 h gewährleistet. Eine Erhöhung der Temperatur beschleunigt den Trocknungsprozess.

Da die Leder/Viskose Verbindung nach dem Zug/Scherversuch vielversprechende Ergebnisse zeigte, wurde die industrielle Anwendung in einer Sitzfertigung durchgeführt. Dazu wurden Leder/Viskose Proben mit einer Laminiermaschine verklebt.

Die Parameter der Laminiermaschine wurden so eingestellt, dass zum einen die Klebefestigkeit erreicht wird und zum anderen das Leder nicht verformt wird. Leder tendiert sich durch die Einwirkung von Hitze oder Feuchtigkeit zu verformen und muss durch einen gewissen Anpressdruck wieder glatt gebügelt werden, um die Form und Oberfläche zu gewährleisten. Auf der anderen Seite müssen die Parameter so gewählt werden, dass sich der Klebstoff nicht zersetzt (die, mit einer thermogravimetrischen Analyse (TGA) ermittelte Zersetzungstemperatur ist 75 °C) und der Klebstoff auch nicht heraus- oder durch die Viskose gepresst wird.

Die optimalen Parameter für das Verfahren, die jedoch geringfügig angepasst werden können, sind: T1, T2 = 35 °C, p = 2,0 bar, die Durchlaufgeschwindigkeit ist 2,3 m/min. Der Klebstoff wird zuerst am Leder mit einem Pinsel, Sprühpistole, Spritze, Spatel oder Kartusche appliziert (Menge ca. 0.21 g/cm²) und etwa 2 min angetrocknet. Danach wird der Viskoseteil auf das Leder gelegt und ohne anstreichen/andrücken in die Laminiermaschine eingefahren.

Wie oben erwähnt, benötigt ein erfindungsgemäßer Klebstoff keine Lösemittel und kann daher unbedenklich verklebt und entsorgt werden. Ein üblicher, konventioneller Klebstoff wird, bei gleicher Durchlaufgeschwindigkeit, bei T1 = 85 °C, T2 = 135 °C verklebt.

## Patentansprüche

1. Klebstoff, insbesondere zum Kleben von Leder, enthaltend
- eine wässrige Lösung enthaltend 5 - 90 Gewichtsprozent Ligninsulfonat, bevorzugt 15 - 30 Gewichtsprozent Ligninsulfonat,
- Enzyme in einem volumenbezogenen Verhältnis von 1:70 bis 1:150, bevorzugt etwa 1:100, also beispielsweise 1 ml Enzyme auf 100 ml Ligninsulfonat in wässriger Lösung,
**dadurch gekennzeichnet, dass** der Klebstoff Glyzerin in einem volumenbezogenen Verhältnis von 1:1 bis 1:4, bevorzugt etwa 1:2 enthält, also beispielsweise 1 Liter Glyzerin auf 2 Liter Ligninsulfonat in wässriger Lösung.

2. Klebstoff nach Anspruch 1,
**dadurch gekennzeichnet, dass** die Enzyme Myceliophthora thermophila Laccase sind.

3. Klebstoff nach Anspruch 1 oder 2,
**dadurch gekennzeichnet, dass** der Klebstoff zusätzlich Alkyl-keten-dimere (AKD) im Verhältnis 1 - 10 m/V % enthält, also beispielsweise 1 g Alkyl-keten-dimere auf 100 ml Lingninsulfonat in wässriger Lösung.

4. Klebstoff nach einem der zuvor genannten Ansprüche,
**dadurch gekennzeichnet, dass** die Viskosität 6-15 Pa*s beträgt, vorzugsweise 7-10 Pa*s, besonders bevorzugt 8 Pa*s.

5. Verfahren zur Herstellung eines Klebstoffes, insbesondere zum Kleben von Leder,
**dadurch gekennzeichnet, dass**, nach dem Mischen oder Bereitstellen einer wässrigen Lösung mit Bestandteilen gemäß einem der Ansprüche 1 bis 3, die wässrige Lösung durch Umwälzen und Erhitzen weiterverarbeitet wird, wobei das Umwälzen bevorzugt kontinuierlich erfolgt, insbesondere durch Rühren, Mixen, Sprudeln oder Einblasen von Luft.

6. Verfahren nach Anspruch 5,
**dadurch gekennzeichnet, dass** das Umwälzen und Erhitzen so lange erfolgt, bis eine gewünschte Viskosität, insbesondere nach Anspruch 3, erreicht ist.

7. Verfahren nach Anspruch 5 oder 6,
**dadurch gekennzeichnet, dass** das Weiterverarbeiten auf einer Heizplatte erfolgt oder in einem beheizten Gefäß, in dem oder an dem vorzugsweise ein Rührer eingebaut oder angebaut ist, insbesondere auf einer Heizplatte mit einem Magnetrührer oder auf einer magnetischen Heizplatte mit einem Rührknochen.

8. Verfahren zur Anwendung eines Klebstoffes der nach einem der Ansprüche 5 bis 7 hergestellt ist,
**dadurch gekennzeichnet, dass** der Klebstoff nach dem Weiterverarbeiten durch kontinuierliches Rühren und Erhitzen unmittelbar zur Herstellung einer Klebeverbindung verwendet wird oder unter Ausschluss von Sauerstoff, vorzugsweise gekühlt, gelagert wird und nach der Lagerung zur Herstellung einer Klebeverbindung verwendet wird.

9. Verfahren zur Anwendung eines Klebstoffes nach Anspruch 8,
**dadurch gekennzeichnet, dass** mittels des Klebstoffes Leder auf Leder, Leder auf Viskose und/oder Viskose auf Viskose geklebt wird, insbesondere zur Herstellung eines Autositzes.

10. Verfahren zur Anwendung eines Klebstoffes nach Anspruch 8 oder 9,
**dadurch gekennzeichnet, dass** die Herstellung einer Klebeverbindung mittels des Klebstoffes bei 35 Grad Celsius und/oder bei 2 bar Druck erfolgt, insbesondere in einer Laminiermaschine.
